Europäisches Patentamt

European Patent Office

Office européen des brevets

(11) Publication number: **0 501 575 A2**

# EUROPEAN PATENT APPLICATION

(21) Application number: **92200513.7**

(22) Date of filing: **21.02.92**

(51) Int. Cl.5: **C08G 59/06**

(30) Priority: **26.02.91 JP 53097/91**

(43) Date of publication of application:
**02.09.92 Bulletin 92/36**

(84) Designated Contracting States:
**BE DE ES FR GB IT NL**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Kobayashi, Yoshikazu, c/o Yuka Shell Epoxy K.K.**
**No. 1, Tohocho, Yokkaichi City**
**Mie Prefecture(JP)**
Inventor: **Yamamoto, Yijiro, c/o Yuka Shell Epoxy K.K.**
**No. 1, Tohocho, Yokkaichi City**
**Mie Prefecture(JP)**

(54) A process for the preparation of highly reactive, high-molecular weight epoxy resins.

(57) The present invention relates to a process for the preparation of a highly reactive and high-molecular weight epoxy resin, which requires a minimum number of reaction steps and a very short reaction time, by reacting a low-molecular weight epoxy resin, a polyhydric phenol and water in the presence of at least one kind of dicarboxylic acid as addition reaction catalyst, and at least one addition polymerization catalyst other than a dicarboxylic acid.

The addition polymerization reaction of the polyhydric phenol with the low-molecular weight epoxy resin takes place simultaneously with the diol group-formation as a result of the hydrolysis of part of the epoxy groups with water.

The present invention relates to a process for the preparation of a highly reactive, high-molecular weight epoxy resin which can be advantageously used for the production of coatings, particularly heat-condensation-type curable coatings.

In more detail, the present invention relates to a process for preparing a highly reactive, high-molecular weight epoxy resin in a short-time, one-step reaction, wherein during the addition reaction step of low-molecular weight epoxy resin with a polyhydric phenol, water is present and at the same time subjected to said addition reaction, so that part of said epoxy resin is hydrolyzed to form diol groups.

In heat-condensation-type coatings, use is made of high-molecular weight epoxy resins in combination with one or more curing agents such as resol resins, urea resins, and melamine resins. In this heat condensation reaction, the hydroxyl groups present in the epoxy resins react principally with methylol groups or various kinds of alkoxy groups present in the curing agents, thus effecting dehydration or dealcoholization.

It is known that by partially hydrolyzing the epoxy group to diols, which do not substantially participate in the above-mentioned condensation reaction, the condensation curing reaction can be accelerated.

A process for obtaining high-molecular weight epoxy resins by addition reaction of polyhydric phenols with low-molecular weight epoxy resins, simultaneously with partial hydrolysis of the epoxy groups is known from US patent No. 3,632,836. Herein, low-molecular weight or high-molecular weight epoxy resins to be hydrolyzed are dissolved in inactive organic solvents, followed by mixing the resulting solution with a diluted aqueous solution of acid catalysts, then effecting a reaction thereof while heating and washing the reaction product to remove the acid catalysts therefrom and, finally, recovering the solvents and hydrolyzed epoxy resins. This process, however, requires the recovery of the great amount of organic solvents used, which is a disadvantage in view of industrial operations.

In Japanese Patent Application Publication Sho 63-26765 a process is proposed to prepare hydrolyzed epoxy resins (without using organic solvents), by reacting low-molecular weight epoxy resins with water in the presence of a dicarboxylic acid and a phosphonium compound, as catalysts. The thus obtained hydrolyzed epoxy resins were subjected to addition polymerization with polyhydric phenols in the presence of a catalyst for obtaining the macromolecular product.

This process, however, requires more than one reaction step and a long reaction time for obtaining the aimed high-molecular weight epoxy resins.

The third process so far proposed is an addition reaction of a low-molecular weight epoxy resin and a polyhydric phenol in the presence of a catalyst, followed by direct hydrolysis of the high-molecular weight epoxy resin. This process, however, also requires more than one reaction step and a long reaction time.

The object of the present invention is to provide a process for preparing a highly reactive, and high-molecular weight epoxy resin, whereof part of the epoxy groups have been hydrolyzed, which requires a minimum number of reaction steps and a very short reaction time.

The invention, therefore, relates to a process for the preparation of a highly reactive, high-molecular weight epoxy resin according to the present invention which comprises an addition reaction of a low-molecular weight epoxy resin with a polyhydric phenol and water in the presence of at least one kind of dicarboxylic acid as addition reaction catalyst and at least another kind of addition polymerization catalyst.

In the macromolecularization process of the low-molecular weight epoxy resin according to the present invention, the addition reaction of the epoxy resin with the polyhydric phenol takes place simultaneously with the diol group formation as a result of the addition reaction of part of the epoxy groups with water.

The thus obtained epoxy resins remarkably excel in reactivity with curing agents such as, for example, resol resins, urea resins, melamine resins and so on, particularly when they are used in heat condensation curing-type coatings.

The low-molecular weight epoxy resin to be used in the preparation of the highly reactive, high-molecular weight epoxy resin according to the present invention, may be any kind of epoxy resin, particularly a bisphenol-type epoxy resin, preferably a bisphenol A-type epoxy resin or a bisphenol F-type epoxy resin.

Examples of useful bisphenol-type epoxy resins which are commercially available are Epikote 828, Epikote 834 and Epikote 836 (Epikote is a trade name) as bisphenol A-type epoxy resins, and Epikote 807 as a bisphenol F-type epoxy resin, according to the present invention. These epoxy resins may be alone or as a mixture of two or more resins.

The polyhydric phenols useful in the process of the present invention are, for example, bisphenol A, bisphenol F, phenols and cresols. the polyhydric phenols may be used in combination with monophenols. Examples of such monophenols are, for example, p-t-butylphenol, cumylphenol, nonylphenol and octylphenol. The amount of polyhydric phenol to be used in the process of the present invention depends on the desired molecular weight of the high-molecular weight epoxy resin to be prepared, but in case heat-condensation curing-type resins for coatings are being prepared, of from 0.17 to 1.0 equivalent, preferably of from 0.47 to 0.9 equivalent, and more preferably of from 0.79 to 0.88 equivalent of the polyhydric phenol per epoxy equivalent of the low-molecular weight epoxy resin is suitably used.

The use of too small amounts of the polyhydric phenol results in a reduction of the molecular weight of the epoxy resin produced, which results in a poor coating performance, for instance poor flexibility, whereas if too great amounts are being used, the molecular weight of the epoxy resins produced becomes too great, which causes problems in coating performance and handleability of the resins.

The water to be used in the process of the present invention may suitably be distilled water, ion exchange water or tap water. The amount of water used varies depending on the desired degree of epoxy group hydrolysis, but is usually of from 0.05 to 10% by weight, preferably of from 0.1 to 5% by weight, and more preferably of from 0.2 to 1% by weight based on the weight of the low-molecular weight epoxy resin. The amount of the water consumed in the hydrolysis reaction will vary with the amount of the catalyst used. Suitably the amount of water added to the reaction mixture is such that at the end of the reaction about 50% of the amount of water initially present, will be consumed.

If the amount of the water added to the reaction mixture is too small, less diol groups are being formed so that the reactivity of the resulting high-molecular weight epoxy resin is not sufficient. On the other hand, if the amount of water added to the reaction mixture is too much, the catalyst cannot sufficiently promote the hydrolysis reaction due to the presence of excessive water in the reaction system. This results in an insufficient hydrolysis reaction and the excess of water needs to be removed from the resulting epoxy resin product.

As dicarboxylic acid to be used as addition reaction catalyst, in the process of the present invention may be mentioned any dicarboxylic acid having of from 2 to 10 carbon atoms, preferably of from 2 to 6 carbon atoms and more preferably of from 2 to 4 carbon atoms, such as for example, oxalic acid, malonic acid, succinic acid, glutaric acid, adipic acid, pimelic acid, suberic acid, azelaic acid and sebacic acid, or a mixture of two or more of these acids.

The hydrates of the above-mentioned dicarboxylic acids can also be used in the process according to the invention. The amount of dicarboxylic acid used may vary depending on the reaction conditions but is usually in the range of from 0.001 to 0.5% by weight, preferably of from 0.01 to 0.2% by weight, and more preferably of from 0.015 to 0.1% by weight based on the weight of the low-molecular weight epoxy resin. If the amount of the carboxylic acid used is too small, the reaction time required for the hydrolysis reaction becomes too long and the desired degree of hydrolysis cannot be achieved. Further, if too much of the dicarboxylic acid is used, the hydrolysis reaction will be difficult to control and the quality of the high-molecular weight epoxy resin is reduced due to the large amount of dicarboxylic acid left in the resin.

Suitable polymerization catalysts to be used in addition to and in combination with the dicarboxylic acid in the process of the present invention are, for example, quaternary ammonium salts such as tetramethylammonium chloride, tetramethylammonium bromide, tetrabutylammonium bromide, trioctylammonium chloride and benzyltriethylammonium chloride; quaternary phosphonium salts such as ethyltriphenylphosphonium chloride, ethyltriphenylphosphonium bromide, ethyltriphenylphosphonium iodide and ethyltriphenylphosphonium acetate. The quaternary ammonium salts are particularly preferred. The amount of the above-mentioned additional addition polymerization catalyst used in the process of the present invention lies usually in the range of from 0.001 to 0.5% by weight, preferably of from 0.01 to 0.2% by weight, and more preferably from 0.02 to 0.1% by weight, based on the weight of the low molecular weight epoxy resin.

In the process according to the present invention, the reaction temperature applied suitably lies in the range of from 50 to 250 °C, preferably of from 60 to 220 °C. The reaction time applied usually lies in the range of from 1 to 15 hours, preferably of from 2 to 10 hours after the start of temperature rise of the reaction mixture comprising the low-molecular weight epoxy resin, the polyhydric phenol, the dicarboxylic acid, the addition polymerization catalyst and water. The pressure applied during the reaction may be atmospheric or elevated pressure.

In the Examples and Comparative Examples, "pbw" and "%" mean "parts by weight" and "% by weight", respectively.

Example 1

A four-necked 1 l. separable flask equipped with a stirrer, a cooler, a nitrogen-gas inlet means, and a thermometer was charged with 500 pbw Epikote 828 (epoxy equivalent = 187 g/eq.) and 251 pbw bisphenol A. The temperature was raised to 60 °C under nitrogen gas stream, followed by addition to the reaction mixture of 2.5 pbw water, 0.15 pbw oxalic acid (II), hydrate, and 0.25 pbw tetramethylammonium chloride, followed by a six-hour reaction during which the reaction temperature was increased to 200 °C. The solid epoxy resin obtained has an epoxy equivalent weight of 2452 g/eq., a hydrolyzate equivalent (defined as "1,2-diol content" hereinafter) of 0.14 meq./g, and a resin solution viscosity (in 40% Butylcarbitol) at 25 °C to $Z_4^-$ according to the Gardner-Holdt method.

Example 2

The process for the preparation of a solid epoxy resin of Example 1 was repeated except for the use of 500 pbw Epikote 828, 251 pbw bisphenol A, 2.5 pbw water, 0.15 pbw oxalic (II) hydrate, and 0.25 pbw tetramethylammonium chloride. The resulting epoxy resin has an epoxy equivalent weight of 2815 g/eq., a 1,2-diol content of 0.18 meq./g, and a Gardner-Holdt viscosity of $Z_4$.

Example 3

The process for the preparation of a solid epoxy resin of Example 1 was repeated except for the use of 500 pbw Epikote 828, 251 pbw bisphenol A, 5 pbw water, 0.25 pbw oxalic (II) hydrate, and 0.1 pbw tetramethylammonium chloride. The resulting epoxy resin has an epoxy equivalent weight of 3145 g/eq., a 1,2-diol content of 0.2 meq./g, and a Gardner-Holdt viscosity of $Z_4$.

Example 4

The process for the preparation of a solid epoxy resin of Example 1 was repeated except for the use of 500 pbw Epikote 828, 192 pbw bisphenol A, 3.75 pbw water, 0.25 pbw oxalic (II) hydrate and 0.1 pbw tetramethylammonium chloride. The resulting epoxy resin has an epoxy equivalent weight of 893 g/eq., a 1,2-diol content of 0.22 meq./g, and a Gardner-Holdt viscosity of S.

Comparative Example 1

The process for the preparation of a solid epoxy resin of Example 1 was repeated except for the use of 500 pbw Epikote 828, 254 pbw of bisphenol A, and 0.05 pbw of tetramethylammonium chloride. The resulting epoxy resin has an epoxy equivalent weight of 990 g/eq., a 1,2-diol content of 0.02 meq./g, and a Gardner-Holdt viscosity of $Z_4$.

Comparative Example 2

The process for the preparation of a solid epoxy resin of Example 1 was repeated except for the use of 500 pbw Epikote 828, 252 pbw bisphenol A, 10.1 pbw cumyl phenol and 0.25 pbw tetramethylammonium chloride. The resulting epoxy resin has an epoxy equivalent weight of 2503 g/eq., a 1,2-diol content of 0.02 meq./g, and a Gardner-Holdt viscosity of $Z_3$-$Z_4$.

Comparative Example 3

A four-necked 1 l. pressure reactor equipped with a stirrer, a nitrogen-gas inlet means, and a thermometer was charged with 500 pbw Epikote 828, 24 pbw water, 0.5 pbw oxalic acid (II) hydrate, and 0.125 pbw tetramethylammonium chloride, followed by a purging with nitrogen gas in order to obtain a nitrogen pressure of 1 kg/cm$^2$ in the reactor. The temperature of the resulting mixture was raised to 130 °C during a period of one hour, followed by a reaction at 130 °C for three hours. Then, the reactor pressure was restored to normal pressure, kept at 130 °C under vacuum for one hour and then cooled to 100 °C. The resulting liquid epoxy resin has an epoxy equivalent weight of 192 g/eq., and a 1,2-diol content of 0.17 meq./g.

251 pbw bisphenol A and 0.125 g tetramethylammonium chloride were added to the above-mentioned reactor containing the liquid epoxy resin. This was followed by a purging with nitrogen gas in order to obtain a nitrogen pressure of 1 kg/cm$^2$ inside the reactor. At this moment temperature inside the reactor was 60 °C which was then raised to 200 °C, followed by a six-hour reaction in order to obtain a solid epoxy resin. This epoxy resin had an epoxy equivalent weight of 2546 g/eq., a 1,2-diol content of 0.14 meq./g, and a Gardner-Holdt viscosity of $Z_4^-$. The total time required for the preparation of this epoxy resin was 12 hours.

Comparative Example 4

4

The process of Example 1 was repeated except for the use of 500 pbw Epikote 828, 192 pbw bisphenol A and 0.1 pbw tetramethylammonium chloride and raising the temperature of the reactants to 165 °C during a period of 1.5 hours followed by a two-hour reaction at a temperature of 165 °C in order to obtain a solid epoxy resin. the resulting epoxy resin has an epoxy equivalent of 750 g/eq., a 1,2-diol content of 0.02 meq./g, and a Gardner-Holdt viscosity of S$^-$.

The reaction times of the above-mentioned respective Examples and Comparative Examples, the physical properties of the epoxy resins produced and the film performances (gel-content) of the coatings comprising these epoxy resins are shown in Table 1

Table 1

| Examples | | Examples | | | | Comparative Examples | | | |
|---|---|---|---|---|---|---|---|---|---|
| | | 1 | 2 | 3 | 4 | 1 | 2 | 3 | 4 |
| Reaction Time (hr) *1 | | 6 | 6 | 6 | 3.5 | 6 | 6 | 12 | 3.5 |
| Physical Properties of Resins | Epoxy Equivalent weight (g/eq.) | 2452 | 2815 | 3415 | 893 | 1990 | 2503 | 2546 | 750 |
| | 1,2-diol content (meq./g) *2 | 0.14 | 0.18 | 0.20 | 0.22 | 0.02 | 0.02 | 0.14 | 0.02 |
| | Viscosity *3 | $Z_4^-$ | $Z_4$ | $Z_4$ | S | $Z_4$ | $Z_4^-$ | $Z_4^-$ | $S^-$ |
| | Film Performance (Gel-content) *4 | 86.1 | 87.0 | 87.2 | — | 75.1 | 77.0 | 85.6 | — |

*1   The reaction time required for the production of the resins

*2   Each of the epoxy resins was reacted with an excessive amount of ammonium periodate (tetra valent) in anhydrous chloroform to form iodic acid.  Then, the unreacted periodate was reduced with potassium iodide to form free iodine, and after back titration with sodium thiosulfate standard solution, the 1,2-diol content was determined from the thus consumed amount of the periodate.

*3   Viscosity values were determined of 40% butylcarbithol solutions of each of the epoxy resins using a Gardner viscometer at 25 °C.

*4   Each of the epoxy resins was mixed with a resol-type phenolic resin as curing agent (Hitanol 4100, a product of Hitachi Kasei Sha), and phosphoric acid as a catalyst in a solid weight ratio of 90:10:0.05 and dissolved in a solvent (xylene/n-butanol/cyclohexane = 1/1/1 in weight ratio) in order to form a coating having a solid content of 40%.  Each was coated on both sides of a cleaned aluminium plate with a layer of a thickness of 5 to 10 $\mu$ of the thus formed coating formulations, followed by curing at 200 °C for 10 minutes. The weight contents of the solvent-non-extractive components of the cured coatings were determined as gel-content (%), after subjection to a one-hour solvent extraction under reflux of methylethylketone.

## Claims

1.  A process for the preparation of a highly reactive, high-molecular weight epoxy resin, which comprises effecting an addition reaction of a polyhydric phenol and water with a low-molecular weight epoxy resin in the presence of at least one kind of dicarboxylic acid as addition reaction catalyst and at least another kind of addition polymerization catalyst.

2.  A process as claimed in the claim 1, wherein said dicarboxylic acid is used in an amount of from 0.001 to 0.5% by weight based on the weight of said low-molecular weight epoxy resin.

3.  A process as claimed in the claim 1 or 2, wherein said another kind of addition polymerization catalyst is used in an amount of from 0.001 to 0.5% by weight based on the amount of said low-molecular weight epoxy resin.

4.  A process as claimed in any one of the claims 1 to 3, wherein the amount of water used is of from 0.05 to 10% by weight based on the amount of said low-molecular weight epoxy resin.

5.  A process as claimed in any one of the claims 1 to 4, wherein the dicarboxylic acid is oxalic acid or hydrated oxalic acid.

6.  A process as claimed in any one of the claims 1 to 5, wherein said another kind of addition polymerization catalyst is a quaternary ammonium salt.